# EUROPEAN PATENT SPECIFICATION

(11) **EP 2 299 511 B1**
(45) Date of publication and mention of the grant of the patent: **13.06.2018**
(21) Application number: 09181035.8
(22) Date of filing: 31.12.2009
(51) Int. Cl.: H01M 10/60

(54) **Rechargeable battery and battery module**
Wiederaufladbare Batterie und Batteriemodul
Batterie rechargeable et module de batterie

(30) Priority: 18.08.2009 US 234893 P; 22.12.2009 US 645312
(43) Date of publication of application: 23.03.2011
(73) Proprietor: Samsung SDI Co., Ltd., Yongin-si, Gyeonggi-do 17084 (KR)
(72) Inventor: Kim, Tae-Keun, Gyeonggi-do (KR); Shin, Jeong Soon, Gyeonggi-do (KR); Roh, Sae-Weon, Gyeonggi-do (KR); Choi, Nam-Soon, Gyeonggi-do (KR); Kim, Sung-Soo, Gyeonggi-do (KR); Kim, Jun-Sik, Gyeonggi-do (KR)
(74) Representative: Grey, Ian Michael

(56) References cited:
- EP-A2- 2 020 695
- WO-A1-2009/018940
- JP-A- 2007 220 544
- JP-A- 2009 146 881
- JP-A- 2009 170 369
- US-A- 5 510 207
- US-A1- 2009 142 660

## Description

The described technology relates generally to a rechargeable battery and a battery module. More particularly, the described technology relates generally to a rechargeable battery and a battery module having a case with an improved structure.

A rechargeable battery can be recharged and discharged, unlike a primary battery that cannot be recharged. A low capacity rechargeable battery is used for a small portable electronic device such as a mobile phone, a laptop computer, and a camcorder, and a large capacity rechargeable battery is used as a power source for driving a motor such as for a hybrid vehicle.

A large capacity high power rechargeable battery with high energy density using a non-aqueous electrolyte has been developed, and the rechargeable battery is formed with a large capacity high power rechargeable battery module by coupling a plurality of rechargeable batteries in series or in parallel in order to use it to drive a device, for example, a motor such as an electric vehicle requiring a large amount of electric power.

Further, a high power rechargeable battery is generally formed with a plurality of rechargeable batteries that are coupled in series or in parallel, and the rechargeable battery may be formed in a cylindrical shape or a square shape.

A conventional rechargeable battery includes an electrode group in which a positive electrode and a negative electrode are positioned with a separator interposed therebetween, a metal can having a space that houses the electrode group, a cap plate that closes and seals the metal can and in which a terminal hole that has a terminal inserted therein is formed, and a terminal that is electrically connected to the electrode group and that is inserted into the terminal hole to protrude to the outside of a case.

A lithium ion battery among existing rechargeable batteries is used as a small mobile terminal battery, uses a small metal can or a film type pouch sheath material, and has a secure sealing structure through welding or fusing in order to isolate the outside from the inside of the battery.

However, a pouch type battery is weak with respect to external impact and cannot easily discharge heat. Further, because the pouch type battery has no structure that fixes its external shape, it is difficult to manufacture the pouch type batteries with a battery module by stacking.

A metal can type battery has high strength, but has a heavy weight and has a difficulty in discharging internal heat to the outside.

The above information disclosed in this Background section is only for enhancement of understanding of the background of the described technology and therefore it may contain information that does not form the prior art that is already known in this country to a person of ordinary skill in the art.

The described technology has been made in an effort to provide a rechargeable battery and a battery module improving output per unit weight and improving heat dissipating characteristics.

It is known from WO2009/018940 to provide a rechargeable battery comprising a case having a recess defined by a wall of the case and, an electrode assembly disposed within said recess, the electrode assembly being placed in said recess through an opening in the upper end of the case, wherein the case includes a heat dissipating flange formed along a circumference of the recess that extends outwardly from an upper end of said wall in a first direction to disspate heat generated by the battery, wherein the electrode assembly comprises a plurality of positive electrodes and negative electrodes alternately stacked with separators disposed therebetween, and in that a cover is attached to said heat dissipating flange to extend across and seal the opening.

A rechargeable battery characterised in that the cover is a film and in that the case comprises a plate extending from at least a portion of said heat dissipating flange in a second direction, and a heat dissipating fin protruding from said heat dissipating flange parallel to said plate.

In one embodiment, the case includes a lower end and a conduit for the flow of coolant through the case extends through said lower end beneath the recess.

The electrode assembly may include electrode terminals and the heat dissipating flange may then include a depression to receive said terminals protruding from the case.

In some embodiments, the electrode assembly includes electrode terminals that protrude through an opening in the wall forming the recess in the case.

At least one electrode terminal may include an insulator to insulate said electrode terminal from said case.

In some embodiments, an insulating layer is disposed in the recess.

A sealing layer may be formed on the heat dissipating flange to attach the film cover to the heat dissipating flange. The sealing layer may be patterned in a check pattern or a stripe pattern.

The film cover may comprise a metal foil having a polymer layer applied to the surface of said metal foil.

According to the invention, there is also provided a battery module comprising a plurality of rechargeable batteries according to the invention, in stacked relation.

In one preferred embodiment, the rechargeable batteries are stacked in alignment such that the lower end of the case of at least one rechargeable battery lies in contact with the film cover of an adjacent rechargeable battery, the rechargeable batteries being sandwiched between two end plates attached to each other by fixing members that extend through the heat dissipating flange of each rechargeable battery and, preferably, a spacer disposed between the heat dissipating flanges of adjacent rechargeable batteries.

In another preferred embodiment, the rechargeable batteries are stacked in alignment such that the film cover of at least one rechargeable battery lies in contact with the film cover of an adjacent rechargeable battery.

The rechargeable batteries may be positioned relative to each other such that the positive electrode terminal of a rechargeable battery is welded to a positive electrode terminal of its adjacent rechargeable battery with which it is in contact via said film cover, and the negative electrode terminal of said rechargeable battery is welded to a negative electrode terminal of its adjacent rechargeable battery with which it is in contact via said film cover, and all the positive electrodes of the rechargeable batteries are connected together and all the negative electrodes of the rechargeable batteries are connected together, to couple said rechargeable batteries in parallel.

Alternatively, the rechargeable batteries may be positioned relative to each other such that the negative electrode terminal of a first rechargeable battery is welded to a positive electrode terminal of and adjacent rechargeable battery with which it is in contact via said film cover, the negative electrode terminal of said adjacent battery being welded to the positive electrode terminal of another battery whose lower end lies in contact with the lower end of said adjacent rechargeable battery, to couple said rechargeable batteries in series.

According to an exemplary embodiment of the present invention, heat dissipating characteristics of a rechargeable battery are improved and output per unit weight thereof is improved. Further, a battery module is easily fastened and assembled.

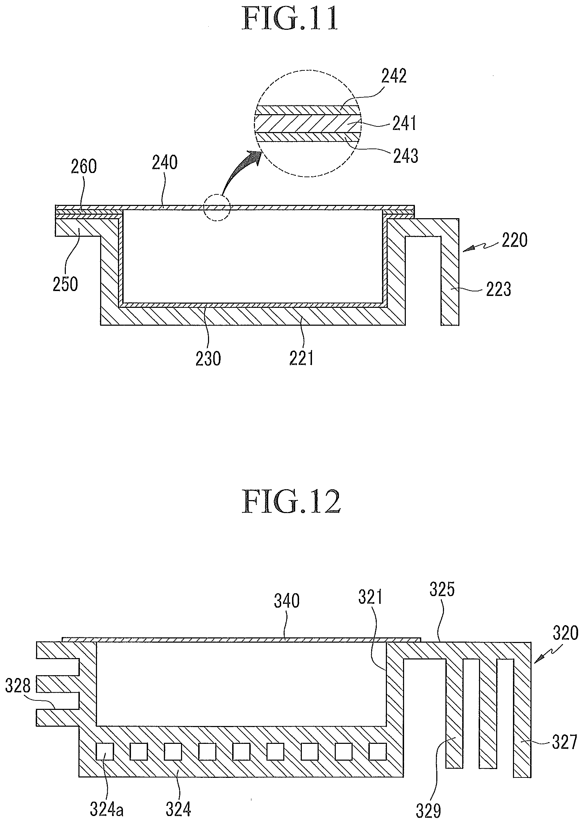

Preferred embodiments of the invention will now be described, by way of example only, with reference to Figure 12 of the accompanying drawings, in which:
FIG. 1 is a perspective view illustrating a rechargeable battery;
FIG. 2 is a cross-sectional view of the rechargeable battery taken along line II-II of FIG. 1;
FIG. 3A is a top plan view illustrating a case, and FIG. 3B is a top plan view illustrating a modified example of a case;
FIG. 4 is a cross-sectional view illustrating a battery module;
FIG. 5 is an exploded perspective view illustrating a rechargeable battery;
FIG. 6 is a side view illustrating a battery module;
FIG. 7 is a side view illustrating a battery module;
FIG. 8 is an exploded perspective view illustrating a rechargeable battery;
FIG. 9 is a perspective view illustrating a rechargeable battery;
FIG. 10 is a rear view illustrating a rechargeable battery;
FIG. 11 is a cross-sectional view illustrating a case and a film cover of a rechargeable battery;
FIG. 12 is a cross-sectional view illustrating a case and a film cover of a rechargeable battery according to an embodiment of the present invention.
FIG. 13 is a perspective view illustrating a rechargeable battery.

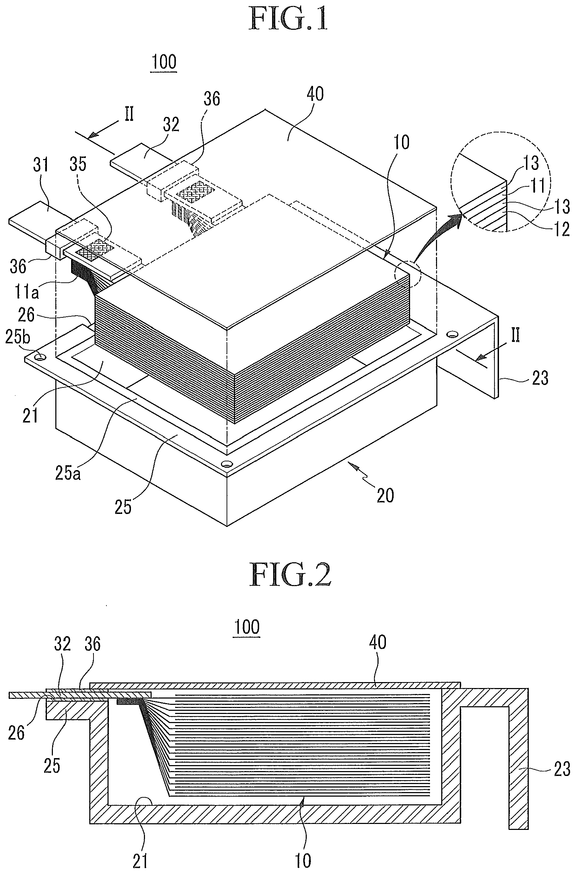

The present invention will be described more fully hereinafter with reference to Figure 12 of the accompanying drawings, which shows an exemplary embodiment of the invention. Figures 1 to 11 and 13 show rechargeable batteries which do not form part of the invention, although features described with reference to Figures 1 to 11 and 13 may be included in the embodiment of the invention described with reference to Figure 12. As those skilled in the art would realize, the described embodiments may be modified in various different ways, all without departing from the scope of the present invention. In the specification and drawings, like reference numerals designate like elements.

FIG. 1 is a perspective view illustrating a rechargeable battery, and FIG. 2 is a cross-sectional view of the rechargeable battery taken along line II-II of FIG. 1.

Referring to FIGS. 1 and 2, a rechargeable battery 100 includes an electrode assembly 10 in which separators 13 are interposed between positive electrodes 11 and negative electrodes 12, a case 20 that houses the electrode assembly 10, a positive electrode terminal 31 and a negative electrode terminal 32 that are electrically connected to the electrode assembly 10, and a film cover 40 that seals the case 20. As an example of the rechargeable battery 100, a lithium-ion rechargeable battery is described.

The positive electrode 11 is formed in a structure in which a positive active material is coated on a positive current collector, and the negative electrode 12 is formed in a structure in which a negative active material is coated on a negative current collector. The electrode assembly 10 is formed in a structure in which a plurality of positive electrodes 11 and negative electrodes 12 are alternately stacked with the separators 13 interposed therebetween.

However, the electrode assembly 10 may be formed in a structure of interposing the separators 13 between the positive electrodes 11 and the negative electrodes 12 of a belt shape and spiral-winding them.

In the stacked electrode assembly 10, a positive uncoated region and a negative uncoated region are positioned at one side end thereof, the positive electrode terminal 31 is attached to the positive uncoated region by welding, and the negative electrode terminal 32 is attached to the negative uncoated region by welding. In the positive electrode terminal 31 and the negative electrode terminal 32, an insulation layer 36 for insulation from the case 20 is formed to enclose a circumference of the terminals 31 and 32.

The case 20 includes a mounting recess 21 that houses the electrode assembly 10, and a heat dissipating flange 25 that is extended to the outside from an upper end of the mounting recess 21. The mounting recess 21 has an approximately quadrangular shape, and is disposed at the center of the case 20. The case 20 is formed with a plate shape, and the mounting recess 21 is formed by bending a plate-shaped case. The heat dissipating flange 25 is formed along a circumference of the mounting recess 21, and a fastening hole 25b is formed at the corner of the heat dissipating flange 25. A terminal recess or depression 26 in which the terminals 31 and 32 are inserted is formed in the heat dissipating flange 25, and the terminal recess 26 is formed from an external end portion of the heat dissipating flange 25 to the mounting recess 21. The insulation layer 36 is inserted into the terminal recess 26 to seal between the case 20 and the film cover 40.

Further, in the heat dissipating flange 25, a sealing portion 25a that attaches the film cover 40 is formed in a portion contacting with the mounting recess 21.

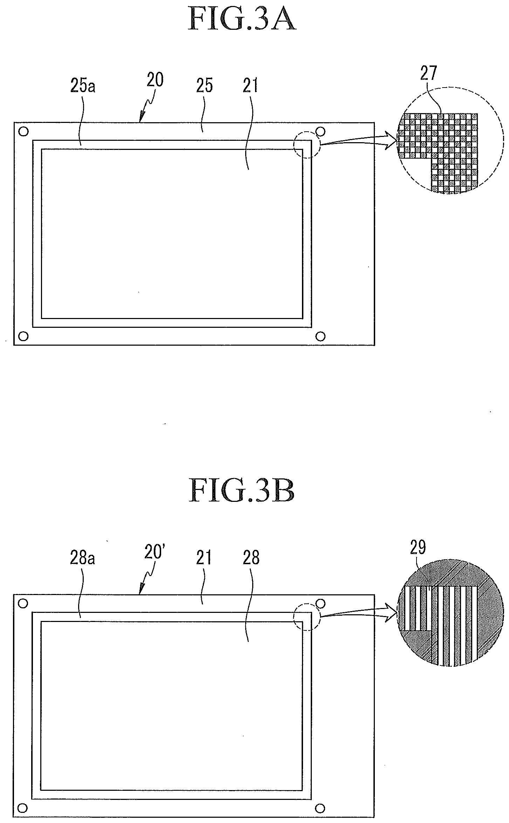

As shown in FIG. 3A, in the sealing portion 25a, an adhesive 27 is patterned in a check form and coated. Further, as shown in FIG. 3B, in a sealing portion 28a that is formed in a heat dissipating flange 28 of a case 20', the adhesive 29 is patterned in a stripe form. When the sealing portions 25a and 28a are patterned in a check form or a stripe form, the film cover 40 more closely contacts with the sealing portions 25a and 28a to stably seal the mounting recess 21.

The film cover 40 is bonded to the sealing portion 25a, is formed in an approximately quadrangular shape, and entirely covers an opening of the mounting recess 21. Accordingly, the mounting recess 21 is sealed by the film cover 40. The film cover 40 may be made of a polymer, or be formed in a structure in which a polymer is coated on both surfaces of a metal foil.

A bent heat dissipating plate 23 is formed at one end of the heat dissipating flange 25. The heat dissipating plate 23 is bent toward a bottom direction of the mounting recess 21, and is formed at a position that is separated from the mounting recess 21. Accordingly, by discharging a heat through the heat dissipating plate 23, the case 20 can be efficiently cooled. The heat dissipating plate 23 is formed integrally with the heat dissipating flange 25, and heat that is generated within the case 20 can be rapidly discharged through the heat dissipating flange 25 and the heat dissipating plate 23.

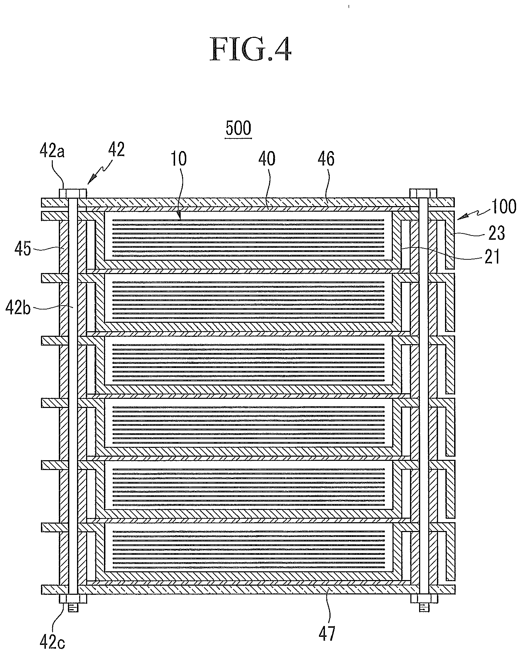

FIG. 4 is a cross-sectional view illustrating a battery module.

Referring to FIG. 4, a battery module 500 includes a plurality of stacked rechargeable batteries 100, end plates 46 and 47 that are installed at the outermost sides of the rechargeable batteries 100, and a fixing member 42 that penetrates through and is fastened to the end plates 46 and 47 and the case 20 of the rechargeable batteries 100.

The rechargeable batteries 100 are stacked so that the bottom of the mounting recess 21 contacts with a heat dissipating flange 25 of a neighboring rechargeable battery 100, and the bottom of a neighboring rechargeable battery 100 is positioned on a film cover 40. Accordingly, the film cover 40 can be safely protected from an external impact. Further, walls of the mounting recess 21 are arranged in a line in order to support a load that is transferred through a neighboring case 20.

A fixing member 42 is inserted into a fastening hole 25b that is formed in the heat dissipating flange 25, and the fixing member 42 penetrates through and is fastened to the end plates 46 and 47 and the heat dissipating flange 25.

The fixing member 42 includes a connecting bar 42b in which a head portion 42a is formed at one side thereof and a nut 42c that is fastened to the connecting bar 42b. The fixing member 42 is integrally fixed by putting pressure on the cases 20.
A spacer 45 is installed between the heat dissipating flanges 25 of neighboring rechargeable batteries 100, and is formed with a hollow shape in order to insert the fixing member 42 therein.

The end plates 46 and 47 are installed in an upper part and a lower part of the battery module 100, respectively, the end plate 47 that is installed at one side thereof closely contacts the bottom of the case 20, and the end plate 46 that is installed at the other side thereof covers the film cover 40.

By stacking the cases 20, the battery module 500 can be easily manufactured, and when an error occurs in some rechargeable battery 100, the rechargeable battery 100 can be easily replaced and repaired. Further, heat can be easily discharged through the heat dissipating flange 25 that is formed in the cases 20.

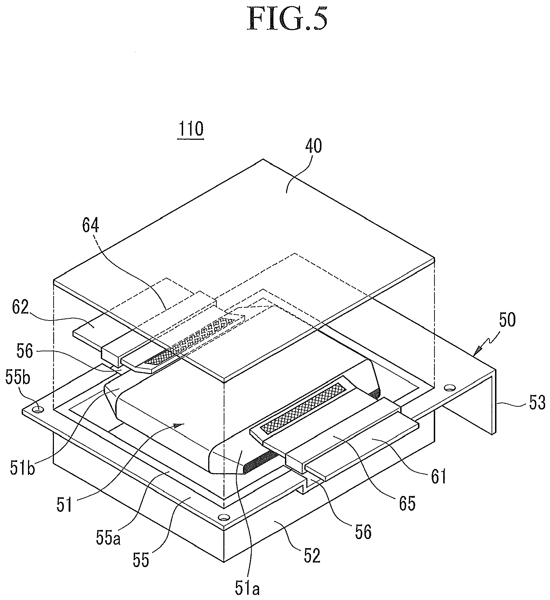

FIG. 5 is an exploded perspective view illustrating a rechargeable battery.

Referring to FIG. 5, a rechargeable battery 110 includes an electrode assembly 51 in which separators are interposed between positive electrodes 51a and negative electrodes 51b, a case 50 that houses the electrode assembly 51, a positive electrode terminal 61 and a negative electrode terminal 62 that are electrically connected to the electrode assembly 51, and a film cover 40 that seals the case 50.

The electrode assembly 51 is formed by interposing a separator between the positive electrode 51a and the negative electrode 51b of a belt shape, and spiral-winding them. In the spiral-wound electrode assembly 51, a positive uncoated region is formed at one side end thereof and a negative uncoated region is formed at the other side end thereof. In the electrode assembly 51, the positive electrode terminal 61 is attached to the positive uncoated region by welding, and the negative electrode terminal 62 is attached to the negative uncoated region by welding. Accordingly, the positive electrode terminal 61 and the negative electrode terminal 62 protrude in opposite directions.

In the positive electrode terminal 61 and the negative electrode terminal 62, insulation layers 64 and 65 for insulation from the case 50 are formed to enclose circumferences of the terminals 61 and 62.

The case 50 includes a mounting recess 52 that houses the electrode assembly 51, and a heat dissipating flange 55 that is extended to the outside from an upper end of the mounting assembly 52. The mounting assembly 52 has an approximately quadrangular shape and is disposed at the center of the case 50.

The heat dissipating flange 55 is formed along a circumference of the mounting assembly 52, and a fastening hole 55b is formed at the corner of the heat dissipating flange 55. A terminal recess 56 in which the terminals 61 and 62 are inserted is formed in the heat dissipating flange 55, and the terminal recess 56 is formed from an external end portion of the heat dissipating flange 55 to the mounting recess 52. An insulation layer 65 is inserted into the terminal recess 56 to seal between the case 50 and the film cover 40.

Further, a sealing portion 55a is formed in the heat dissipating flange 55 so that the film cover 40 may be attached to a portion contacting the mounting recess 52. A bent heat dissipating plate 53 is formed at one end of the heat dissipating flange 55. The heat dissipating plate 53 is bent in a bottom direction of the mounting recess 52 from the heat dissipating flange 55, and is formed at a position that is separated from the mounting recess 52.

A coolant is supplied to a space between the heat dissipating plate 53 and the mounting recess 52 to efficiently cool the case 50. The heat dissipating plate 53 is integrally formed with the heat dissipating flange 55, and heat that is generated within the case 50 can be rapidly discharged through the heat dissipating flange 55 and the heat dissipating plate 53.

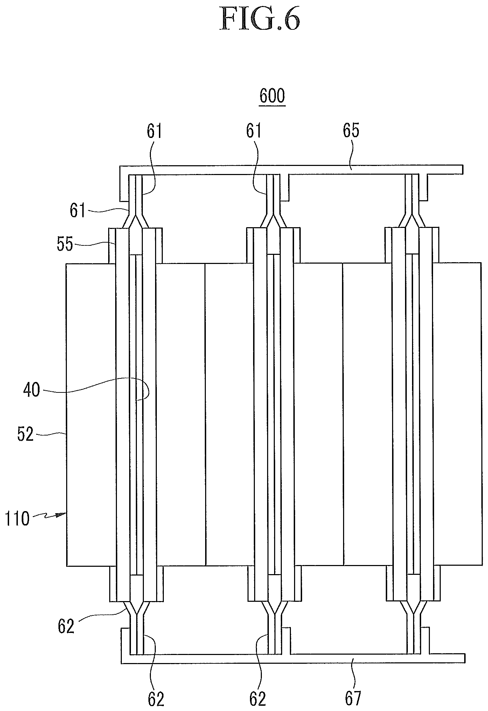

FIG. 6 is a side view illustrating a battery module 600.

Referring to FIG. 6, a battery module 600 includes a plurality of rechargeable batteries 110 and connection members 65 and 67 that electrically connect the rechargeable batteries 110.
One rechargeable battery 110 is disposed to contact via a film cover 40 with a rechargeable battery 110 of one side and to contact in the bottom of a mounting recess 52 with a rechargeable battery 110 of the other side. Accordingly, because the film cover 40 is disposed between the heat dissipating flanges 55, the film cover 40 can be prevented from being damaged by an external impact. In this case, a positive electrode terminal 61 is opposite to a positive electrode terminal 61 of a neighboring rechargeable battery 110, and a negative electrode terminal 62 is opposite to a negative electrode terminal 62 of a neighboring rechargeable battery 110.

The positive electrode terminal 61 is welded to the negative electrode terminal 62 of a neighboring rechargeable battery 110 and the negative electrode terminal 62 is welded to the negative electrode terminal 62 of a neighboring rechargeable battery 110, and thus two rechargeable batteries 110 are coupled in parallel. The connection members 65 and 67 electrically connect two rechargeable batteries 110, and in the present exemplary embodiment, the rechargeable batteries 110 are coupled in parallel. By electrically connecting a plurality of small rechargeable batteries 110, a large capacity battery module can be formed and structural stability of the battery module and an output to weight ratio thereof can be improved.

However, the connection members 65 and 67 may connect six rechargeable batteries 110 with a 2P3S structure by coupling two rechargeable batteries 110 in series.

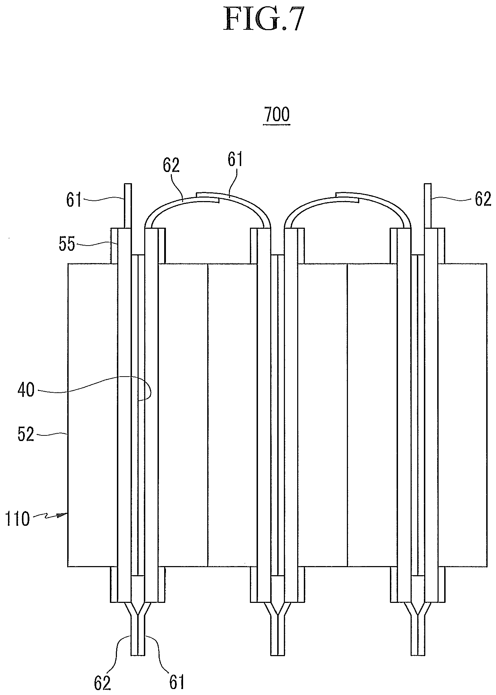

FIG. 7 is a side view illustrating a battery module 700.

Referring to FIG. 7, a rechargeable battery 110 is formed in the same structure as that of the rechargeable battery 110 previously described, and therefore a detailed description thereof will be omitted.

One rechargeable battery 110 is disposed to contact via a film cover 40 with a rechargeable battery 110 of one side and to contact in the bottom of a mounting recess 52 with a rechargeable battery 110 of the other side. In this case, a positive electrode terminal 61 is opposite to a negative electrode terminal 62 of a neighboring rechargeable battery 110, and a negative electrode terminal 62 is opposite to a positive electrode terminal 61 of a neighboring rechargeable battery 110.

At one side, adjacent positive and negative electrode terminals 61 and 62 are bonded by welding, and at the other side, distant negative and positive electrode terminals 62 and 61 are bonded by welding. Accordingly, the rechargeable batteries 110 can be coupled in series without interposing a separate member.

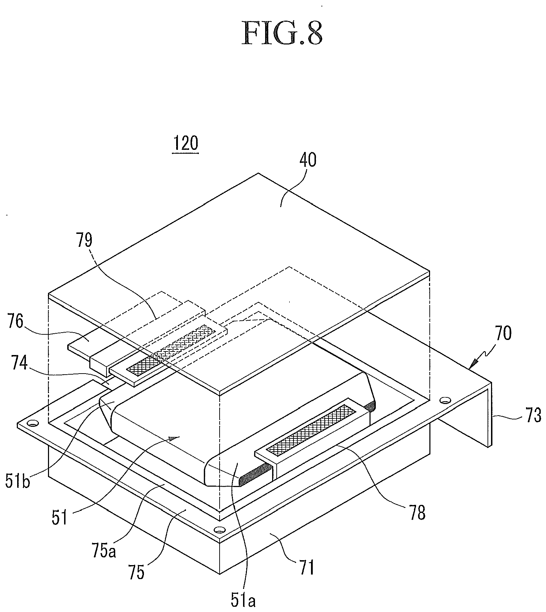

FIG. 8 is an exploded perspective view illustrating a rechargeable battery.

Referring to FIG. 8, a rechargeable battery 120 includes an electrode assembly 51 in which a separator is interposed between a positive electrode 51a and a negative electrode 51b, a case 70 that houses the electrode assembly 51, a positive electrode terminal 76 and negative electrode terminal 78 that are electrically connected to the electrode assembly 51, and a film cover 40 that seals the case 70.

The electrode assembly 51 is formed in the same structure as that of the electrode assembly according to the second exemplary embodiment, and therefore a detailed description thereof will be omitted.

The case 70 includes a mounting recess 71 that houses the electrode assembly 51, and a heat dissipating flange 75 that is extended to the outside from an upper end of the mounting recess 71. The mounting recess 71 has an approximately quadrangular shape, and is disposed at the center of the case 70.

In the electrode assembly 51, the positive electrode terminal 76 is attached to the positive electrode 51a thereof by welding, and the negative electrode terminal 78 is attached to the negative electrode 51b thereof by welding. Accordingly, the positive electrode terminal 76 and the negative electrode terminal 78 protrude in opposite directions.

In the positive electrode terminal 76, an insulation layer 79 for insulation from the case 70 is formed to enclose a circumference of the positive electrode terminal 76. The negative electrode terminal 78 is bent toward the bottom of the mounting recess 71 and is attached to an inner wall surface of the mounting recess 71 by welding. Accordingly, the case 70 has negative polarity. Therefore, the rechargeable batteries 120 are stacked, and the rechargeable batteries 120 can be easily coupled in series by simply attaching the positive electrode terminal 76 to a case 70 of a neighboring rechargeable battery 120 by welding.

The heat dissipating flange 75 is formed along a circumference of the mounting recess 71, and a fastening hole 75b is formed at the corner of the heat dissipating flange 75. A terminal recess 74 in which the positive electrode terminal 76 is inserted is formed in the heat dissipating flange 75, and the insulation layer 79 is inserted into the terminal recess 74 to seal between the case 70 and the film cover 40.

Further, a sealing portion 75a is formed in the heat dissipating flange 75 so that the film cover 40 may be attached to a portion contacting the mounting recess 71. A bent heat dissipating plate 73 is formed at one end of the heat dissipating flange 75. The heat dissipating plate 73 is bent in a bottom direction of the mounting recess 71 from the heat dissipating flange 75, and is formed at a position that is separated from the mounting recess 71.

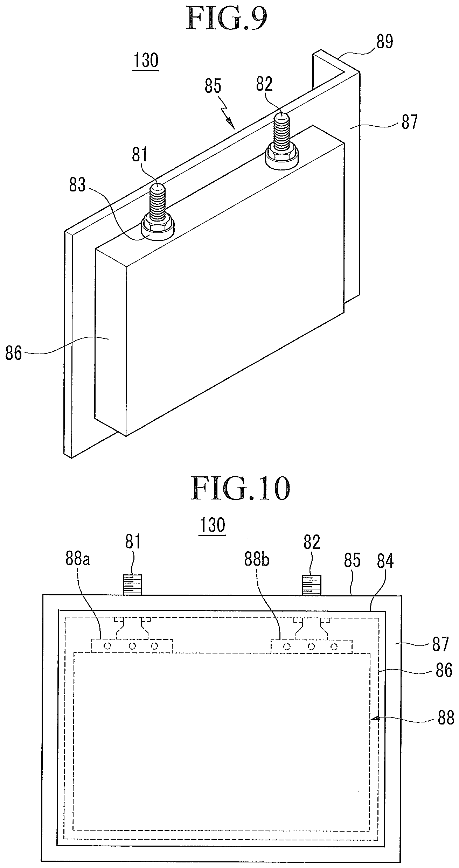

FIG. 9 is a perspective view illustrating a rechargeable battery, and FIG. 10 is a rear view illustrating a rechargeable battery.

Referring to FIGS. 9 and 10, a rechargeable battery 130 includes a case 85, an electrode assembly 88 that is inserted into the case 85, a positive electrode terminal 81 and negative electrode terminal 82 that are electrically connected to the electrode assembly 88 and that protrude to the outside of the case 85 through an opening in a wall of the case that forms the recess, and a film cover 84 that seals the case 85.

The case 85 includes a mounting recess 86 that houses the electrode assembly 88, and a heat dissipating flange 87 that is extended to the outside from an upper end of the mounting recess 86. The mounting recess 86 has an approximately quadrangular shape, and is disposed at the center of the case 85.

The heat dissipating flange 87 is formed along the circumference of the mounting recess 86, and a bent heat dissipating plate 89 is formed at one side end of the heat dissipating flange 87.

The positive electrode terminal 81 is electrically connected to a positive electrode 88a of the electrode assembly 88 to penetrate through a wall surface of the mounting recess 86 and to protrude to the outside, and the negative electrode terminal 82 is electrically connected to a negative electrode 88b of the electrode assembly 88 to penetrate through a wall surface of the mounting recess 86 and to protrude to the outside. In this case, a gasket 83 for insulation is installed between the case 85 and the terminals 81 and 82.

FIG. 11 is a cross-sectional view illustrating a case and a film cover of a rechargeable battery.

Referring to FIG. 11, a case 220 according to the present exemplary embodiment includes a mounting recess 221 that houses an electrode assembly and a heat dissipating flange 250 that is extended to the outside from an upper end of the mounting recess 221. The mounting recess 221 has an approximately quadrangular shape and is disposed at the center of the case 220.

The heat dissipating flange 250 is formed along a circumference of the mounting recess 221, and a bent heat dissipating plate 223 is formed at one side end of the heat dissipating flange 250.

An insulation film 230 for insulation is coated on an inner surface of the case 220. The insulation film 230 is made of a polymer, as an example. Further, in the heat dissipating flange 250, an adhesive layer 260 is formed in an upper surface of the heat dissipating flange 250 to which a film cover is attached, and thus the film cover 240 can be stably attached to the heat dissipating flange 250.

The film cover 240 includes a metal foil 241 that is disposed at the center thereof, and polymer layers 242 and 243 that are disposed at both surfaces of the metal foil 241. Accordingly, because the polymer layers 242 and 243 and the adhesive layer 260 are bonded by thermo-compression, the film cover 240 can be stably fixed to the case 220, and the metal foil 241 can provide predetermined strength to the film cover 240.

FIG. 12 is a cross-sectional view illustrating a case and a film cover of a rechargeable battery according to an embodiment of the present invention.

Referring to FIG. 12, a case 320 according to the present exemplary embodiment includes a mounting recess 321 that houses an electrode group, and a heat dissipating flange 325 that is extended to the outside from an upper end of the mounting recess 321. The mounting recess 321 has an approximately quadrangular shape, and is disposed at the center of the case 320. A film cover 340 that covers the mounting recess 321 is installed in the case 320.

The heat dissipating flange 325 is formed along a circumference of the mounting recess 321, and a bent heat dissipating plate 327 is formed at one side end of the heat dissipating flange 325. A bottom cooling part 324 is formed in the bottom of the mounting recess 321 at a lower end of the case 320 beneath the recess 321, and a cooling flow path or conduit 324a in which a coolant can move is formed within the bottom cooling part 324. Further, a heat dissipating fin 328 that is protruded in parallel to the heat dissipating flange 325 is formed in an external wall surface of the mounting recess 321.

A heat dissipating fin 329 that is protruded in parallel to the heat dissipating plate 327 is formed in the heat dissipating flange 325 in which the heat dissipating plate 327 is formed.

According to the exemplary embodiment, the heat dissipating fins 328 and 329 and the cooling flow path 324a are formed in the case 320 to easily discharge heat that is generated within the case 320.

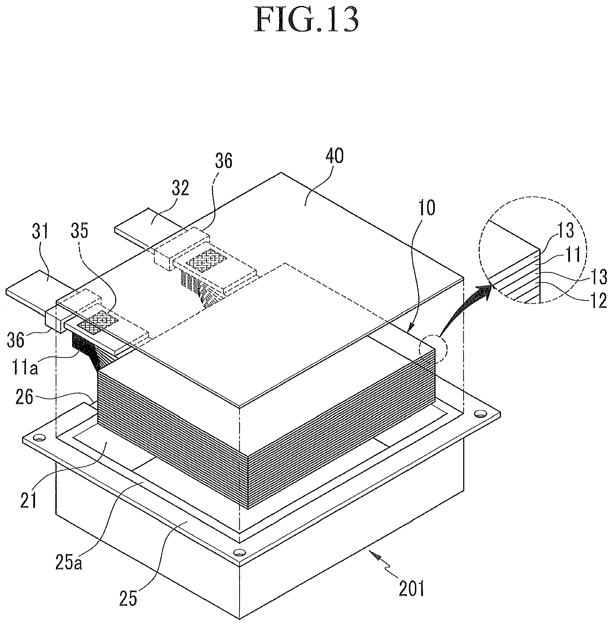

FIG. 13 is a perspective view illustrating a rechargeable battery.

Referring to FIG. 13, a case 201 of a rechargeable battery does not include a heat dissipating plate (reference numeral 23 of FIG. 1). As such, the case 201 has a simple structure, thereby reducing the time and the cost for manufacturing the case 201.

In FIG. 13, the elements other than the case are the same as those of the first embodiment shown in FIG. 1.

In any of the above-described embodiments, the case may be formed from aluminium, stainless steel, nickel, or an alloy thereof.

While this disclosure has been described in connection with what is presently considered to be a practical exemplary embodiment, it is to be understood that the invention is not limited to the disclosed embodiment, but, on the contrary, is intended to cover various modifications and equivalent arrangements included within the scope of the appended claims.

According to the present exemplary embodiment, the heat dissipating fins 328 and 329 and the cooling flow path 324a are formed in the case 320 to easily discharge heat that is generated within the case 320.

FIG. 13 is a perspective view illustrating a rechargeable battery according to the eighth embodiment of the present invention.

Referring to FIG. 13, a case 201 of a rechargeable battery according to the present illustrated embodiment does not include a heat dissipating plate (reference numeral 23 of FIG. 1). As such, the case 201 has a simple structure, thereby reducing the time and the cost for manufacturing the case 201.

In FIG. 13, the elements other than the case are the same as those of the first embodiment shown in FIG. 1. The present invention, however, is not limited thereto. Thus, the case not having the heat dissipating plate can be applied to the second to seventh embodiments.

In any of the above-described embodiments, the case may be formed from aluminium, stainless steel, nickel, or an alloy thereof.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable battery comprising a case (320) having a recess (321) defined by a wall of the case (320) and, an electrode assembly (10,51) disposed within said recess (321), the electrode assembly (10,51) being placed in said recess (321) through an opening in the upper end of the case (320), wherein the case (320) includes a heat dissipating flange (325) formed along a circumference of the recess (321) and that extends outwardly from an upper end of said wall in a first direction to disspate heat generated by the battery, wherein the electrode assembly (10,51) comprises a plurality of positive electrodes (11,51a) and negative electrodes (12,51b)alternately stacked with separators (13) disposed therebetween, and in that a cover (340) is attached to said heat dissipating flange (325) to extend across and seal the opening, **characterised in that** the cover (340) is a film and **in that** the case (320) comprises a plate (327) extending from at least a portion of said heat dissipating flange (325) in a second direction, and a heat dissipating fin (329) protruding from said heat dissipating flange (325) parallel to said plate (327).

2. A rechargeable battery according to claim 1, wherein the case (320) includes a lower end (324) and a conduit (324a) for the flow of coolant through the case (320) extends through said lower end beneath the recess (321).

3. A rechargeable battery according to claim 2, wherein the electrode assembly (10,51) includes electrode terminals (31,32) and the heat dissipating flange (325) includes a depression (26) to receive said terminals (31,32) protruding from said case (320).

4. A rechargeable battery according to any of claims 1 to 3, wherein the electrode assembly (10,51) includes electrode terminals (81,82) that protrude through an opening in the wall (86) forming the recess in the case (320).

5. A rechargeable battery according to claim 3 or claim 4, wherein at least one electrode terminal (31,32; 81,82) includes an insulator (36,83) to insulate said electrode terminal (31,32; 81,82) from said case (320).

6. A rechargeable battery according to claim 1, comprising an insulating layer (230) disposed in the recess.

7. A rechargeable battery according to any preceding claim, wherein a sealing layer (27) is formed on the heat dissipating flange (325) to attach the film cover (340) to the heat dissipating flange (325).

8. A rechargeable battery according to any preceding claim, wherein the film cover (340) comprises a metal foil having a polymer layer (242,243) applied to the surfaces of said metal foil.

9. A rechargeable battery according to claim 7 or 8, wherein an adhesive is patterned on the sealing layer in a check or stripe form.

10. A battery module comprising a plurality of rechargeable batteries (100) according to any preceding claim in stacked relation.

11. A battery module according to claim 10, wherein the rechargeable batteries (100) are stacked in alignment such that the lower end of the case (20) of at least one rechargeable battery lies in contact with the film cover (40) of an adjacent rechargeable battery, the rechargeable batteries (100) being sandwiched between two end plates (46,47) attached to each other by fixing members (42b) that extend through the heat dissipating flange (25) of each rechargeable battery and, preferably, a spacer (45) disposed between the heat dissipating flanges (25) of adjacent rechargeable batteries.

12. A battery module according to claim 11, wherein the rechargeable batteries (100) are stacked in alignment such that the film cover (340) of at least one rechargeable battery lies in contact with the film cover (340) of an adjacent rechargeable battery.

13. A battery module according to claim 12, wherein the rechargeable batteries are positioned relative to each other such that the positive electrode terminal (31) of a rechargeable battery is welded to a positive electrode terminal (31) of its adjacent rechargeable battery with which it is in contact via said film cover (340), and the negative electrode terminal (32) of said rechargeable battery is welded to a negative electrode terminal (32) of its adjacent rechargeable battery with which it is in contact via said film cover (340), and all the positive electrodes of the rechargeable batteries are connected together and all the negative electrodes of the rechargeable batteries are connected together, to couple said rechargeable batteries in parallel.

14. A battery module according to claim 12, wherein the rechargeable batteries are positioned relative to each other such that the negative electrode terminal (32) of a first rechargeable battery is welded to a positive electrode terminal (31) of an adjacent rechargeable battery with which it is in contact via said film cover (40), the negative electrode terminal (32) of said adjacent battery being welded to the positive electrode terminal (31) of another battery whose lower end lies in contact with the lower end of said adjacent rechargeable battery, to couple said rechargeable batteries in series.

## Patentansprüche

1. Wiederaufladbare Batterie, die ein Gehäuse (320) mit einer Aussparung (321), die durch eine Wand des Gehäuses (320) definiert ist, und eine Elektrodenanordnung (10, 51) umfasst, die in der Aussparung (321) angeordnet ist, wobei die Elektrodenanordnung (10, 51) in der Aussparung (321) durch eine Öffnung im oberen Ende des Gehäuses (320) platziert ist, wobei das Gehäuse (320) einen Wärmeableitflansch (325) aufweist, der entlang einem Umfang der Aussparung (321) ausgebildet ist und von einem oberen Ende der Wand aus in einer ersten Richtung nach außen verläuft und so Wärme ableitet, die die Batterie erzeugt, wobei die Elektrodenanordnung (10, 51) eine Vielzahl positiver Elektroden (11, 51a) und negativer Elektroden (12, 51b) umfasst, die abwechselnd mit dazwischen angeordneten Separatoren (13) gestapelt sind, und dadurch, dass eine Abdeckung (340) an dem Wärmeableitflansch (325) angebracht ist, damit sie über die Öffnung verläuft und sie verschließt, **dadurch gekennzeichnet, dass** die Abdeckung (340) eine Folie ist, und dadurch, dass das Gehäuse (320) eine Platte (327), die von zumindest einem Abschnitt des Wärmeableitflanschs (325) aus in eine zweite Richtung verläuft, und eine Wärmeableitrippe (329) umfasst, die parallel zu der Platte (327) aus dem Wärmeableitflansch (325) ragt.

2. Wiederaufladbare Batterie nach Anspruch 1, wobei das Gehäuse (320) ein unteres Ende (324) aufweist und ein Kanal (324a) für durch das Gehäuse (320) hindurchströmendes Kühlmittel durch das untere Ende unter der Aussparung (321) verläuft.

3. Wiederaufladbare Batterie nach Anspruch 2, wobei die Elektrodenanordnung (10, 51) Elektrodenanschlüsse (31, 32) aufweist und der Wärmeableitflansch (325) eine Vertiefung (26) zum Aufnehmen der Anschlüsse (31, 32) aufweist, die aus dem Gehäuse (320) ragen.

4. Wiederaufladbare Batterie nach einem der Ansprüche 1 bis 3, wobei die Elektrodenanordnung (10, 51) Elektrodenanschlüsse (81, 82) aufweist, die durch eine Öffnung in der Wand (86) ragen, die die Aussparung in dem Gehäuse (320) bildet.

5. Wiederaufladbare Batterie nach Anspruch 3 oder Anspruch 4, wobei mindestens ein Elektrodenanschluss (31, 32; 81, 82) einen Isolator (36, 83) zum Isolieren des Elektrodenanschlusses (31, 32; 81, 82) gegenüber dem Gehäuse (320) aufweist.

6. Wiederaufladbare Batterie nach Anspruch 1, die eine Isolierschicht (230) umfasst, die in der Aussparung angeordnet ist.

7. Wiederaufladbare Batterie nach einem der vorhergehenden Ansprüche, wobei zur Befestigung der Folienabdeckung (340) an dem Wärmeableitflansch (325) eine Dichtungsschicht (27) an dem Wärmeableitflansch (325) ausgebildet ist.

8. Wiederaufladbare Batterie nach einem der vorhergehenden Ansprüche, wobei die Folienabdeckung (340) eine Metallfolie mit einer Polymerschicht (242, 243) umfasst, die auf die Flächen der Metallfolie aufgebracht ist.

9. Wiederaufladbare Batterie nach Anspruch 7 oder 8, wobei auf der Dichtungsschicht ein Klebstoff in einer Schachbrett- oder Streifenform strukturiert ist.

10. Batteriemodul, das eine Vielzahl von wiederaufladbaren Batterien (100) nach einem der vorhergehenden Ansprüche in einer Stapelbeziehung umfasst.

11. Batteriemodul nach Anspruch 10, wobei die wiederaufladbaren Batterien (100) ausgerichtet derart gestapelt sind, dass das untere Ende des Gehäuses (20) von mindestens einer wiederaufladbaren Batterie mit der Folienabdeckung (40) einer benachbarten wiederaufladbaren Batterie in Kontakt liegt, wobei die wiederaufladbaren Batterien (100) zwischen zwei Endplatten (46, 47) eingelegt sind, die aneinander über Fixierungselemente (42b) befestigt sind, die durch den Wärmeableitflansch (25) von jeder wiederaufladbaren Batterie und vorzugsweise einen Abstandshalter (45) verlaufen, der zwischen den Wärmeableitflanschen (25) benachbarter wiederaufladbarer Batterien angeordnet ist.

12. Batteriemodul nach Anspruch 11, wobei die wiederaufladbaren Batterien (100) ausgerichtet derart gestapelt sind, dass die Folienabdeckung (340) mindestens einer wiederaufladbaren Batterie mit der Folienabdeckung (340) einer benachbarten wiederaufladbaren Batterie in Kontakt liegt.

13. Batteriemodul nach Anspruch 12, wobei die wiederaufladbaren Batterien bezogen aufeinander derart positioniert sind, dass der positive Elektrodenanschluss (31) einer wiederaufladbaren Batterie an einen positiven Elektrodenanschluss (31) seiner benachbarten wiederaufladbaren Batterie angeschweißt ist, die sie über die Folienabdeckung (340) berührt, und der negative Elektrodenanschluss (32) der wiederaufladbaren Batterie an einen negativen Elektrodenanschluss (32) seiner benachbarten wiederaufladbaren Batterie angeschweißt ist, die sie über die Folienabdeckung (340) berührt, und sämtliche positiven Elektroden der wiederaufladbaren Batterien miteinander verbunden sind und sämtliche negative Elektroden der wiederaufladbaren Batterien miteinander verbunden sind, damit die wiederaufladbaren Batterien parallelgeschaltet sind.

14. Batteriemodul nach Anspruch 12, wobei die wiederaufladbaren Batterien bezogen aufeinander derart positioniert sind, dass der negative Elektrodenanschluss (32) einer ersten wiederaufladbaren Batterie an einen positiven Elektrodenanschluss (31) einer benachbarten wiederaufladbaren Batterie angeschweißt ist, die sie über die Folienabdeckung (40) berührt, der negative Elektrodenanschluss (32) der benachbarten Batterie an den positiven Elektrodenanschluss (31) einer weiteren Batterie angeschweißt ist, deren unteres Ende mit dem unteren Ende der benachbarten wiederaufladbaren Batterie in Kontakt liegt, damit die wiederaufladbaren Batterien in Reihe geschaltet sind.

## Revendications

1. Batterie rechargeable, comprenant un boîtier (320) comportant une cavité (321) définie par une paroi du boîtier (320) et un ensemble d'électrodes (10, 51) disposé à l'intérieur de ladite cavité (321), l'ensemble d'électrodes (10, 51) étant disposé dans ladite cavité (321) par l'intermédiaire d'une ouverture dans l'extrémité supérieure du boîtier (320), le boîtier (320) comprenant une bride de dissipation de chaleur (325) formée le long d'une circonférence de la cavité (321) et qui s'étend vers l'extérieur à partir d'une extrémité supérieure de ladite paroi dans une première direction de façon à dissiper de la chaleur générée par la batterie, l'ensemble d'électrodes (10, 51) comprenant une pluralité d'électrodes positives (11, 51a) et d'électrodes négatives (12, 51b) empilées en alternance avec des séparateurs (13) disposés entre celles-ci, et un revêtement (340) étant fixé à ladite bride de dissipation de chaleur (325) de façon à s'étendre à travers l'ouverture et à sceller celle-ci de façon étanche, **caractérisée en ce que** le revêtement (340) est un film et **en ce que** le boîtier (320) comprend une plaque (327) s'étendant à partir d'au moins une partie de ladite bride de dissipation de chaleur (325) dans une deuxième direction, et une ailette de dissipation de chaleur (329) faisant saillie à partir de ladite bride de dissipation de chaleur (325) parallèlement à ladite plaque (327).

2. Batterie rechargeable selon la revendication 1, dans laquelle le boîtier (320) comprend une extrémité inférieure (324), et un conduit (324a) pour l'écoulement d'agent de refroidissement à travers le boîtier (320) s'étend à travers ladite extrémité inférieure en dessous de la cavité (321).

3. Batterie rechargeable selon la revendication 2, dans laquelle l'ensemble d'électrodes (10, 51) comprend des bornes d'électrode (31, 32) et la bride de dissipation de chaleur (325) comprend une dépression (26) pour recevoir lesdites bornes (31, 32) faisant saillie à partir dudit boîtier (320) .

4. Batterie rechargeable selon l'une quelconque des revendications 1 à 3, dans laquelle l'ensemble d'électrodes (10, 51) comprend des bornes d'électrode (81, 82) qui font saillie à travers une ouverture dans la paroi (86) formant la cavité dans le boîtier (320).

5. Batterie rechargeable selon la revendication 3 ou la revendication 4, dans laquelle au moins une borne d'électrode (31, 32 ; 81, 82) comprend un isolateur (36, 83) pour isoler ladite borne d'électrode (31, 32 ; 81, 82) dudit boîtier (320).

6. Batterie rechargeable selon la revendication 1, comprenant une couche isolante (230) disposée dans la cavité.

7. Batterie rechargeable selon l'une quelconque des revendications précédentes, dans laquelle une couche d'étanchéité (27) est formée sur la bride de dissipation de chaleur (325) afin de fixer le revêtement en film (340) à la bride de dissipation de chaleur (325).

8. Batterie rechargeable selon l'une quelconque des revendications précédentes, dans laquelle le revêtement en film (340) comprend une feuille métallique comportant une couche polymère (242, 243) appliquée aux surfaces de ladite feuille métallique.

9. Batterie rechargeable selon la revendication 7 ou 8, dans laquelle un adhésif est disposé sous une forme de motifs sur la couche d'étanchéité sous une forme de damier ou de bande.

10. Module de batterie comprenant une pluralité de batteries rechargeables (100) selon l'une quelconque des revendications précédentes sous une relation empilée.

11. Module de batterie selon la revendication 10, dans lequel les batteries rechargeables (100) sont empilées en alignement de telle sorte que l'extrémité inférieure du boîtier (20) d'au moins une batterie rechargeable se trouve en contact avec le revêtement en film (40) d'une batterie rechargeable adjacente, les batteries rechargeables (100) étant prises en sandwich entre deux plaques d'extrémité (46, 47) fixées l'une à l'autre par des éléments de fixation (42b) qui s'étendent à travers la bride de dissipation de chaleur (25) de chaque batterie rechargeable, et, de préférence, un élément d'espacement (45) étant disposé entre les brides de dissipation de chaleur (25) de batteries rechargeables adjacentes.

12. Module de batterie selon la revendication 11, dans lequel les batteries rechargeables (100) sont empilées en alignement de telle sorte que le revêtement en film (340) d'au moins une batterie se trouve en contact avec le revêtement en film (340) d'une batterie rechargeable adjacente.

13. Module de batterie selon la revendication 12, dans lequel les batteries rechargeables sont positionnées les unes par rapport aux autres de telle sorte que la borne d'électrode positive (31) d'une batterie rechargeable soit soudée à une borne d'électrode positive (31) de sa batterie rechargeable adjacente avec laquelle elle est en contact par l'intermédiaire dudit revêtement en film (340), et que la borne d'électrode négative (32) de ladite batterie rechargeable soit soudée à une borne d'électrode négative (32) de sa batterie rechargeable adjacente avec laquelle elle est en contact par l'intermédiaire dudit revêtement en film (340), et que toutes les électrodes positives des batteries rechargeables soient connectées les unes aux autres, et que toutes les électrodes négatives des batteries rechargeables soient connectées les unes aux autres, de façon à coupler lesdites batteries rechargeables en parallèle.

14. Module de batterie selon la revendication 12, dans lequel les batteries rechargeables sont positionnées les unes par rapport aux autres de telle sorte que la borne d'électrode négative (32) d'une première batterie rechargeable soit soudée à une borne d'électrode positive (31) d'une batterie rechargeable adjacente avec laquelle elle vient en contact par l'intermédiaire dudit revêtement en film (40), la borne d'électrode négative (32) de ladite batterie adjacente étant soudée à la borne d'électrode positive (31) d'une autre batterie dont l'extrémité inférieure se trouve en contact avec l'extrémité inférieure de ladite batterie rechargeable adjacente, de façon à coupler lesdites batteries rechargeables en série.
